# EUROPEAN PATENT APPLICATION

(11) **EP 4 625 967 A1**
(43) Date of publication of application: **01.10.2025**
(21) Application number: 23893901.1
(22) Date of filing: 22.11.2023
(51) Int. Cl.: H04N 5/268

(54) **VIDEO PROCESSING METHOD AND APPARATUS**

(30) Priority: 22.11.2022 CN 202211466591
(71) Applicant: Beijing Zitiao Network Technology Co., Ltd., Beijing 100190 (CN)
(72) Inventor: SHEN, Yuxuan, Beijing 100028 (CN); GAO, Fan, Beijing 100028 (CN); CHE, Wanli, Beijing 100028 (CN); SONG, Shanshan, Beijing 100028 (CN); GU, Chunhui, Beijing 100028 (CN)
(74) Representative: Isarpatent
(86) International application number: PCT/CN2023/133290
(87) International publication number: WO 2024/109813

(57) **Abstract**

The present application discloses a video processing method. In an example, the method can be performed by a first client. After posting a plurality of videos, the first client displays first video identifiers corresponding to the plurality of videos on a first page. After displaying the first video identifiers corresponding to the plurality of videos, if a preset condition is satisfied, the first client can switch, in response to satisfying the preset condition, the first video identifiers corresponding to the plurality of videos to second video identifiers. Therefore, by using the solution, according to the second video identifiers, a user can determine that the plurality of videos is a series of videos. Correspondingly, a viewing experience of a user is enhanced.

## Description

This application claims priority to Chinese Patent Application No. 202211466591.2, entitled "VIDEO PROCESSING METHOD AND APPARATUS", filed on November 22, 2022, which is incorporated herein by reference in its entirety.

### FIELD

The present application relates to the technical field of computers, and in particular, to a method and apparatus for video processing.

### BACKGROUND

With the development of computer technology and network technology, some applications provide a function of posting videos. A user can post videos through these applications. At present, the user can edit a video identifier when posting a video. After completion of edition and posting, the corresponding video identifier can be displayed on a video display page, such as a personal page. However, in some cases, information of the video identifier is unclear, which affects an efficiency of users for obtaining video information and affects a user experience.

Therefore, there is an urgent need for a solution that can solve the above problems.

### SUMMARY

To solve or at least solve the above technical problems, embodiments of the present application provide a method and apparatus for video processing.

In a first aspect, the embodiments of the present application provide a method for video processing. The method includes:
after posting a plurality of videos, displaying first video identifiers corresponding to the plurality of videos on a first page; and
in response to satisfying a preset condition, switching the first video identifiers corresponding to the plurality of videos to second video identifiers.

Alternatively, in response to satisfying a preset condition, switching the first video identifiers corresponding to the plurality of videos to second video identifiers includes:
in a case that a plurality of first video covers corresponding to the plurality of videos are consecutive video covers and/or a plurality of pieces of video content corresponding to the plurality of videos are consecutive video content, switching the first video covers corresponding to the plurality of videos to second video covers.

Alternatively, before switching the first video identifiers corresponding to the plurality of videos to the second video identifiers, the method further includes:
receiving an open operation for a video identifier switching function; and
in response to the open operation, opening the video identifier switching function.

Alternatively, the method further includes:
displaying first prompt information, wherein the first prompt information is used for prompting that the video identifier switching function has been opened.

Alternatively, the second video covers are obtained by splicing the plurality of first video covers corresponding to the plurality of videos; or, the second video covers are obtained according to the plurality of pieces of video content.

Alternatively, in a case that the plurality of first video covers corresponding to the plurality of videos are the consecutive video covers, the second video covers is obtained by splicing the plurality of first video covers corresponding to the plurality of videos.

Alternatively, in a case that the plurality of pieces of video content corresponding to the plurality of videos are the consecutive video content and the plurality of first video covers corresponding to the plurality of videos are not the consecutive video covers, the second video covers is obtained according to the plurality of pieces of video content.

Alternatively, switching the first video identifiers corresponding to the plurality of videos to the second video identifiers includes:
switching the first video identifiers corresponding to the various videos among the plurality of videos to the second video identifiers respectively corresponding to the various videos.

Alternatively, switching the first video identifiers corresponding to the plurality of videos to the second video identifiers includes:
canceling displaying the plurality of first video identifiers of the plurality of videos, and displaying the second video identifier jointly corresponding to the plurality of videos, wherein the second video identifiers are a collection identifier of a video collection corresponding to the plurality of videos, and a video arrangement sequence in the video collection is determined according to a posting sequence of the plurality of videos.

Alternatively, the first video identifiers are first video covers; the second video identifiers are second video covers; and a quantity of the videos included in the video collection is further displayed on the second video cover.

Alternatively, the method further includes:
displaying second prompt information on the first page, wherein the second prompt information is used for promoting to switch the first video identifiers of the plurality of videos to the second video identifiers; and
correspondingly, switching the first video identifiers corresponding to the plurality of videos to the second video identifiers includes:
in response to a confirming operation for the second prompt information, switching the first video identifiers corresponding to the plurality of videos to the second video identifiers.

Alternatively, the first video identifiers are first video covers; the second video identifiers are second video covers; the first video covers include first video serial numbers; the second video covers do not include the first video serial numbers, and the second video covers include second video serial numbers; and an association relationship between the plurality of second video serial numbers corresponding to the plurality of videos is consistent with an association relationship between the plurality of first video serial numbers corresponding to the plurality of videos.

Alternatively, the second video identifiers are second video covers; the second video covers further include a video title; and the video title is determined by:
determining a title of a video that is posted first in the plurality of videos to be the video title; or,
determining the video title according to video content of the plurality of videos.

Alternatively, the method further includes:
in response to a triggering operation for the second video identifier, displaying a video playing page, wherein the video playing page is used for playing a first video in the plurality of videos; an interaction control is further displayed on the video displaying page; and the interaction control is used for triggering displaying of video information of the video collection.

Alternatively, the method further includes:
in response to a triggering operation for the interaction control, displaying video information of the plurality of videos included in the video collection, wherein the video information of the first video includes third prompt information; and the third prompt information is used for prompting that a video played on the video playing page is the first video.

Alternatively, the first video is a video played on a second page displayed by a first client; and before displaying the second video identifier of the video collection further includes:
displaying the second page, wherein the second page is used for playing the first video; and
displaying the second video identifier jointly corresponding to the plurality of videos includes:
in response to a triggering operation for the second page, displaying the first page, and displaying the second video identifier jointly corresponding to the plurality of videos on the first page.

Alternatively, the first video is a video that is posted first in the plurality of videos, or the first video is the hottest video in the plurality of videos.

In a second aspect, the embodiments of the present application provide a method for video processing. The method includes:
determining second video identifiers corresponding to first video identifiers of a plurality of videos that have been posted by a first client; and
sending the second video identifiers to the first client, and controlling the first client to switch, in response to satisfying a preset condition, the first video identifiers corresponding to the plurality of videos to the second video identifiers.

Alternatively, sending the second video identifiers to the first client, and controlling the first client to switch, in response to satisfying the preset condition, the first video identifiers corresponding to the plurality of videos to the second video identifiers includes:
sending first indication information and the second video identifiers to the first client, wherein the first indication information is used for instructing the first client to switch, in response to satisfying the preset condition, the first video identifiers corresponding to the plurality of videos to the second video identifiers.

Alternatively, satisfying the preset condition includes:
a plurality of first video covers corresponding to the plurality of videos are consecutive video covers, and/or a plurality of pieces of video content corresponding to the plurality of videos are consecutive video content.

Alternatively, the first video identifiers are first video covers; the second video identifiers are second video covers; and determining the second video identifiers corresponding to the first video identifiers of the plurality of videos that have been posted by the first client includes:
splicing the plurality of first video identifiers to obtain the second video identifiers.

Alternatively, the first video covers include first video serial numbers; the plurality of videos correspond to a plurality of first video serial numbers; each video corresponds to one first video serial number; and splicing the plurality of first video identifiers to obtain the second video identifier includes:
splicing the video covers of the plurality of videos to obtain a third video cover that includes the plurality of first video serial numbers; and
removing the plurality of first video serial numbers included on the third video cover, and respectively adding second video serial numbers to the third video cover to obtain second video covers respectively corresponding to the various videos among the plurality of videos, wherein each second video cover includes the second video serial number of the video corresponding to the second video cover.

Alternatively, the plurality of videos corresponds to a plurality of second video serial numbers; each video corresponds to one second video serial number; and an association relationship between the plurality of second video serial numbers is consistent with an association relationship between the plurality of first video serial numbers.

Alternatively, the first video identifiers are first video covers; the second video identifiers are second video covers; and determining the second video identifiers corresponding to the first video identifiers of the plurality of videos that have been posted by the first client includes:
determining, from the plurality of videos, a video frame that satisfies a preset condition; and
obtaining the second video covers according to the video frame.

Alternatively, the second video identifiers are second video covers; the second video covers further include a video title; and the method further includes:
determining a title of a video that is posted first in the plurality of videos to be the video title; or,
determining the video title according to video content of the plurality of videos.

Alternatively,
the first indication information is used for instructing the first client to switch the first video identifiers corresponding to the various videos among the plurality of videos to the second video identifiers respectively corresponding to the various videos; or,
the first indication information is used for instructing the first client to: cancel displaying the plurality of first video identifiers of the plurality of videos and display the second video identifier jointly corresponding to the plurality of videos, wherein the second video identifiers are video identifiers corresponding to a video collection corresponding to the plurality of videos, and a video arrangement sequence in the video collection is determined according to a posting sequence of the plurality of videos.

Alternatively, the second video identifier is a second video cover. If the second video identifier is the video identifier corresponding to the video collection, the second video covers further includes a quantity of the videos included in the video collection.

Alternatively, before determining the second video identifiers, the method further includes:
according to video titles of the videos that have been posted by the first client and/or the video serial numbers included on the video covers of the posted videos, determining the plurality of videos from the videos that have been posted by the first client.

Alternatively, according to the video titles of the videos that have been posted by the first client and/or the video serial numbers included on the video covers of the videos that have been posted, determining the plurality of videos from the videos that have been posted by the first client includes:
according to similarities of the video titles of the videos that have been posted, and/or, types of the video serial numbers included on the video covers, determining the plurality of videos from the videos that have been posted by the first client.

In a third aspect, the embodiments of the present application provide an apparatus for video processing. The apparatus includes:
a first display unit, configured to: after posting a plurality of videos, display first video identifiers corresponding to the plurality of videos on a first page; and
a switching unit, configured to: in response to satisfying a preset condition, switch the first video identifiers corresponding to the plurality of videos to second video identifiers.

Alternatively, the switching unit is configured to:
in a case that a plurality of first video covers corresponding to the plurality of videos are consecutive video covers and/or a plurality of pieces of video content corresponding to the plurality of videos are consecutive video content, switch the first video covers corresponding to the plurality of videos to second video covers.

Alternatively, the apparatus further includes:
a receiving unit, configured to: receive, before switching the first video identifiers corresponding to the plurality of videos to the second video identifiers, an open operation for a video identifier switching function; and
an opening unit, configured to: in response to the open operation, open the video identifier switching function.

Alternatively, the apparatus further includes:
a second display unit, configured to display first prompt information, wherein the first prompt information is used for prompting that the video identifier switching function has been opened.

Alternatively, the second video covers are obtained by splicing the plurality of first video covers corresponding to the plurality of videos; or, the second video covers are obtained according to the plurality of pieces of video content.

Alternatively, in a case that the plurality of first video covers corresponding to the plurality of videos are the consecutive video covers, the second video covers is obtained by splicing the plurality of first video covers corresponding to the plurality of videos.

Alternatively, in a case that the plurality of pieces of video content corresponding to the plurality of videos are the consecutive video content and the plurality of first video covers corresponding to the plurality of videos are not the consecutive video covers, the second video covers is obtained according to the plurality of pieces of video content.

Alternatively, the switching unit is configured to:
switch the first video identifiers corresponding to the various videos among the plurality of videos to the second video identifiers respectively corresponding to the various videos.

Alternatively, the switching unit is configured to:
cancel displaying the plurality of first video identifiers of the plurality of videos, and display the second video identifier jointly corresponding to the plurality of videos, wherein the second video identifier is a collection identifier of a video collection corresponding to the plurality of videos, and a video arrangement sequence in the video collection is determined according to a posting sequence of the plurality of videos.

Alternatively, the first video identifiers are first video covers; the second video identifier is a second video cover; and a quantity of the videos included in the video collection is further displayed on the second video cover.

Alternatively, the apparatus further includes:
a third display unit, configured to display second prompt information on the first page, wherein the second prompt information is used for promoting to switch the first video identifiers of the plurality of videos to the second video identifiers.

Correspondingly, the switch unit is configured to:
in response to a confirming operation for the second prompt information, switch the first video identifiers corresponding to the plurality of videos to the second video identifiers.

Alternatively, the first video identifiers are first video covers; the second video identifiers are second video covers; the first video covers include first video serial numbers; the second video covers do not include the first video serial numbers, and the second video covers include second video serial numbers; and an association relationship between the plurality of second video serial numbers corresponding to the plurality of videos is consistent with an association relationship between the plurality of first video serial numbers corresponding to the plurality of videos.

Alternatively, the second video identifiers are second video covers; the second video covers further include a video title; and the video title is determined by:
determining a title of a video that is posted first in the plurality of videos to be the video title; or,
determining the video title according to video content of the plurality of videos.

Alternatively, the apparatus further includes:
a fourth display unit, configured to: in response to a triggering operation for the second video identifier, display a video playing page, wherein the video playing page is used for playing a first video in the plurality of videos; an interaction control is further displayed on the video displaying page; and the interaction control is used for triggering displaying of video information of the video collection.

Alternatively, the apparatus further includes:
a fifth display unit, configured to: in response to a triggering operation for the interaction control, display video information of the plurality of videos included in the video collection, wherein the video information of the first video includes third prompt information; and the third prompt information is used for prompting that a video played on the video playing page is the first video.

Alternatively, the first video is a video played on a second page displayed by a first client, and the apparatus further includes:
a fifth display unit, configured to: display the second page before displaying the second video identifier of the video collection, wherein the second page is used for playing the first video; and
displaying the second video identifier jointly corresponding to the plurality of videos includes:
in response to a triggering operation for the second page, displaying the first page, and displaying the second video identifier jointly corresponding to the plurality of videos on the first page.

Alternatively, the first video is a video that is posted first in the plurality of videos, or the first video is the hottest video in the plurality of videos.

In a fourth aspect, the embodiments of the present application provide an apparatus for video processing. The apparatus includes:
a first determining unit, configured to determine second video identifiers corresponding to first video identifiers of a plurality of videos that have been posted by a first client; and
a sending unit, configured to: send the second video identifiers to the first client, and control the first client to switch, in response to satisfying a preset condition, the first video identifiers corresponding to the plurality of videos to the second video identifiers.

Alternatively, the sending unit is configured to:
send first indication information and the second video identifiers to the first client, wherein the first indication information is used for instructing the first client to switch, in response to satisfying the preset condition, the first video identifiers corresponding to the plurality of videos to the second video identifiers.

Alternatively, satisfying the preset condition includes:
a plurality of first video covers corresponding to the plurality of videos are consecutive video covers, and/or a plurality of pieces of video content corresponding to the plurality of videos are consecutive video content.

Alternatively, the first video identifiers are first video covers; the second video identifiers are second video covers; and the first determining unit is configured to:
splice the plurality of first video identifiers to obtain the second video identifiers.

Alternatively, the first video covers include first video serial numbers; the plurality of videos correspond to a plurality of first video serial numbers; each video corresponds to one first video serial number; and the first determining unit is configured to:
splice the video covers of the plurality of videos to obtain a third video cover that includes the plurality of first video serial numbers; and
remove the plurality of first video serial numbers included on the third video cover, and respectively add second video serial numbers to the third video cover to obtain second video covers respectively corresponding to the various videos among the plurality of videos, wherein each second video cover includes the second video serial number of the video corresponding to the second video cover.

Alternatively, the plurality of videos corresponds to a plurality of second video serial numbers; each video corresponds to one second video serial number; and an association relationship between the plurality of second video serial numbers is consistent with an association relationship between the plurality of first video serial numbers.

Alternatively, the first video identifiers are first video covers; the second video identifiers are second video covers; and the first determining unit is configured to:
determine, from the plurality of videos, a video frame that satisfies a preset condition; and
obtain the second video covers according to the video frame.

Alternatively, the second video identifiers are second video covers; the second video covers further include a video title; and the apparatus further includes:
a second determining unit, configured to determine a title of a video that is posted first in the plurality of videos to be the video title; or,
a third determining unit, configured to determine the video title according to video content of the plurality of videos.

Alternatively,
the first indication information is used for instructing the first client to switch the first video identifiers corresponding to the various videos among the plurality of videos to the second video identifiers respectively corresponding to the various videos; or,
the first indication information is used for instructing the first client to: cancel displaying the plurality of first video identifiers of the plurality of videos and display the second video identifier jointly corresponding to the plurality of videos, wherein the second video identifier is a video identifier corresponding to a video collection corresponding to the plurality of videos, and a video arrangement sequence in the video collection is determined according to a posting sequence of the plurality of videos.

Alternatively, the second video identifier is a second video cover. If the second video identifier is the video identifier corresponding to the video collection, the second video cover further includes a quantity of the videos included in the video collection.

Alternatively, the apparatus further includes:
a fourth determining unit, configured to: before determining the second video identifiers, according to video titles of the videos that have been posted by the first client and/or the video serial numbers included on the video covers of the posted videos, determine the plurality of videos from the videos that have been posted by the first client.

Alternatively, the fourth determining unit is configured to:
before determining the second video identifiers, according to similarities of the video titles of the videos that have been posted, and/or, types of the video serial numbers included on the video covers, determine the plurality of videos from the videos that have been posted by the first client.

In a fifth aspect, the embodiments of the present application provide a device. The device includes a processor and a memory.

The processor is configured to execute instructions stored on the memory to cause the device to perform any method in the first aspect, or to cause the device to perform any method in the second aspect.

In a sixth aspect, the embodiments of the present application provide a computer-readable storage medium, including instructions. The instructions instruct a device to perform any method in the first aspect or the instructions instruct a device to perform any method in the second aspect.

In a seventh aspect, the embodiments of the present application provide a computer program product. The computer program product, when run on a computer, causes the computer to perform any method in the first aspect or causes the computer to perform any method in the second aspect.

Compared with the prior art, the embodiments of the present application have the following advantages:

The embodiments of the present application provide a method for video processing. In an example, the method can be performed by a first client. After posting a plurality of videos, the first client displays first video identifiers corresponding to the plurality of videos on a first page. After displaying the first video identifiers corresponding to the plurality of videos, if a preset condition is satisfied, the first client can switch, in response to satisfying the preset condition, the first video identifiers corresponding to the plurality of videos to second video identifiers. Therefore, by using the solution, according to the second video identifiers, a user can determine that the plurality of videos is a series of videos. Correspondingly, an efficiency for obtaining video information by a user is improved, and a viewing experience of a user is enhanced.

The embodiments of the present application provide a method for video processing. In an example, the method can be applied to a server. As an example, the method includes: determining second video identifiers corresponding to first video identifiers of a plurality of videos that have been posted by a first client; and sending the second video identifiers to the first client, and controlling the first client to switch, in response to satisfying a preset condition, the first video identifiers corresponding to the plurality of videos to the second video identifiers. Therefore, by using the solution, according to the second video identifiers, a user can determine that the plurality of videos is a series of videos. Correspondingly, an efficiency for obtaining video information by a user is improved, and a viewing experience of a user is enhanced.

### BRIEF DESCRIPTION OF THE DRAWINGS

To describe the technical solutions in the embodiments of the present application or in the related art more clearly, the following briefly introduces the accompanying drawings for describing the embodiments or the related art. Apparently, the accompanying drawings in the following description show merely some embodiments recorded in the present application, and a person of ordinary skill in the art may still derive other drawings from the accompanying drawings without creative efforts.
FIG. 1 is a diagram of signaling interaction of a method for video processing provided by an embodiment of the present application;
FIG. 2a is a schematic diagram of a first page provided by an embodiment of the present application;
FIG. 2b is a schematic diagram of another first page provided by an embodiment of the present application;
FIG. 2c is a schematic diagram of still another first page provided by an embodiment of the present application;
FIG. 3 is a schematic structural diagram of an apparatus for video processing provided by an embodiment of the present application; and
FIG. 4 is a schematic structural diagram of another apparatus for video processing provided by an embodiment of the present application.

### DETAILED DESCRIPTION OF EMBODIMENTS

To make a person skilled in the art to better understand the solutions of the present application, the technical solutions in the embodiments of the present application are clearly and completely described below with reference to the accompanying drawings in the embodiments of the present application. Apparently, the described embodiments are merely some rather than all the embodiments of the present application. All other embodiments obtained by a person of ordinary skill in the art based on the embodiments of the present application without making creative efforts shall fall within the protection scope of the present application.

The inventor of the present application has found through research that:

In an example, a user can clip a long video clip into a plurality of short videos for posting when posting the video. In addition, the user can edit a video cover when posting the video. The user can divide a complete image into a plurality of parts according to a layout of the video cover displayed on a client. One part serves as a cover of one video. For example, in a scenario where a list flow being a three-column flow, if the layout of the video cover displayed on the client includes three columns, the user can clip a long video clip into three short videos. Correspondingly, the complete image is divided into three parts respectively serving as the video covers of the three short videos. When the client displays the three video covers in a line, the three video covers can be spliced together into the complete image in the perspective of the user, so that the user determines that the three short videos are a series of videos. However, in this way, once the layout of the video covers displayed on the client changes, for example, if the layout becomes a two-column flow, the three video covers can no longer be spliced together into a complete image in the perspective of the user. Correspondingly, the user cannot determine whether the three short videos are a series of videos through the video covers, resulting in a poor user experience. The series of videos mentioned here, for example, can be videos having an association relationship. The association relationships mentioned here can be an association relationship between video content or video identifiers (e.g. video covers).

In another example, when editing the video cover, the user may not use the aforementioned method for dividing the entire image, but may use another method to edit covers for a plurality of videos in a series of videos separately. For this situation, the user cannot determine which videos are a series of videos through video covers, resulting in a poor user experience.

To solve the above problems, the embodiments of the present application provide a method and apparatus for video processing.

Various nonrestrictive implementations of the present application will be explained in detail below in conjunction with the accompanying drawings.

### Exemplary method

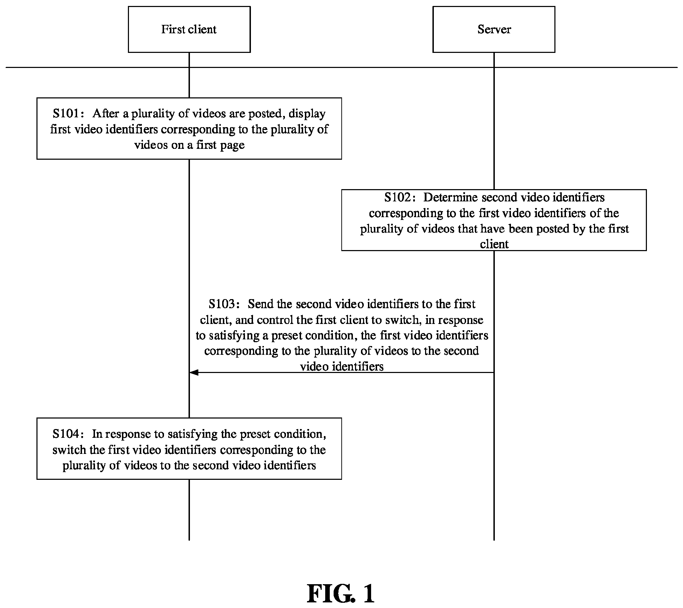

Referring to FIG. 1, it is a diagram of signaling interaction of a video processing method provided by an embodiment of the present application. In this embodiment, the method may, for example, include the following steps: S101-S104.

S101: After posting a plurality of videos, a first client displays first video identifiers corresponding to the plurality of videos on a first page.

The embodiments of the present application do not specifically limit the plurality of videos. The plurality of videos may be, for example, a plurality of short videos. In the embodiments of the present application, the first page may be a page displayed by the first client. In an example, the first page may be, for example, a personal homepage displayed by the first client.

In this embodiment of the present application, the first client may display the first video identifiers corresponding to the various videos among the plurality of videos on the first page. For example, after posting three videos, the first client can display three first video identifiers. One video corresponds to one first video identifier.

In an example, the first video identifiers may be video identifiers edited by a user when the user posts the videos.

This embodiment of the present application does not specifically limit the first video identifiers. In an example, the first video identifiers may include first video covers. In an example, the first video covers may include first video serial numbers. For example, after posting three videos, the first client can display three first video covers. The 1st first video cover includes a first video serial number "First episode"; the 2nd first video cover includes a first video serial number "Second episode"; and the 3rd first video cover includes a first video serial number "Third episode".

In another example, the first video identifiers may include video titles independent of the first video covers. The video titles mentioned herein can be included in text edited by the user when posting the videos.

S102: A server determines second video identifiers corresponding to the first video identifiers of the plurality of videos that have been posted by the first.

In an example, before executing S102, the server may first obtain the first video identifiers of the plurality of videos posted by the first client.

In an example, the server can first determine the plurality of videos before obtaining the first video identifiers of the plurality of videos. In an example, for a series of videos, considering that there is an association relationship between video titles of the videos and video serial numbers on the video covers of the videos, the server may, according to the video titles of the videos that have been posted by the first client and/or the video serial numbers included on the video covers of the videos that have been posted, determine the plurality of videos from the videos that have been posted by the first client.

In an example, the server may determine videos, having related video titles, among the videos that have already been posted by the first client as the plurality of videos. The video titles mentioned here are related, which can mean that the video titles are the same or the video titles include the same keyword. As an example, the video titles are related, which can be determined according to similarities of the video titles. When a similarity between two video titles exceeds a threshold, it can determine that the two video titles are related.

In another example, the server can determine videos, having a preset association relationship between the video serial numbers, among the videos that have already been posted by the first client as the plurality of videos. The preset association relationship mentioned here can be understood as regular changes between the video serial numbers. For example, the video serial numbers are consecutive, namely: first episode, second episode, and third episode. For another example, difference values between the video serial numbers are fixed, namely: first episode, third episode, and fifth episode.

In another example, considering that there may be various types of video serial numbers, such as "Episode *", "Season*Episode*", and an individual serial number "*". For a series of videos, the types of the video serial numbers are usually the same. Therefore, in an example, the server can determine, according to the types of the video serial numbers, the plurality of videos from the videos that have already been posted by the first client. For example, videos with the same video serial number type can be determined to be the plurality of videos.

In another example, the server may determine videos, which have related video titles and have a preset association relationship between the video serial numbers, among the videos that have already been posted by the first client to be the plurality of videos.

After obtaining the first video identifiers of the plurality of videos, the server may determine the second video identifiers corresponding to the plurality of first video identifiers. In an example, the server can determine the second video identifiers of the plurality of videos when it is determined that a preset condition is satisfied.

In this embodiment of the present application, the preset condition may be a condition that may trigger video identifier switching. In an example, the preset condition may be that the plurality of videos is a series of videos. Thus, by using this solution, the video identifiers of a series of videos can be switched, as mentioned earlier. The series of videos may be videos with association relationships. For example, they can be videos having association relationships between video content, or videos having association relationships between video covers. Therefore, in an example, the preset condition is satisfied, which may be: a plurality of first video covers corresponding to the plurality of videos are consecutive video covers, and/or, a plurality of pieces of video content corresponding to the plurality of videos are consecutive video content. In this embodiment of the present application, the consecutive video covers mean that cover content of the video covers can be spliced together into a piece of complete content. The consecutive video content means that the video content has a coherence.

In an example, in specific implementation of determining that the plurality of first video covers corresponding to the plurality of videos are consecutive covers, the server may perform image analysis on the plurality of first video covers, thereby determining that the plurality of first video covers are the consecutive video covers. In another example, a pre-trained first model can be used to determine that the plurality of first video covers are consecutive video covers. The first model can be trained by using a plurality of groups of training samples and labels respectively corresponding to each group of training samples among the plurality of groups of training samples. For ease of description, any training sample of the plurality of groups of training samples is referred to as a "first training sample". The first training sample may include a plurality of training video covers. The label of the first training sample is used for indicating whether the plurality of training video covers included in the first training sample are consecutive video covers. After the first model is obtained by training, the first model can determine, according to the plurality of video covers, whether the plurality of video covers is continuous. Therefore, the plurality of first video covers can be input to the first model. Correspondingly, the first model can output a result indicating whether the plurality of first video covers are consecutive video covers. Therefore, it can determine, according to an output of the first model, that the plurality of first video covers are consecutive video covers.

In an example, in specific implementation of determining that the plurality of pieces of video content are consecutive video content, the server may analyze the plurality of pieces of video content, thereby determining that the plurality of pieces of video content are consecutive video content. In another example, a pre-trained second model can be used to determine that the plurality of pieces of video contents are consecutive video content. The second model can be trained by using a plurality of groups of training samples and labels respectively corresponding to each group of training samples among the plurality of groups of training samples. For ease of description, any training sample of the plurality of groups of training samples is referred to as a "second training sample". The second training sample may include a plurality of training videos. The label of the second training sample is used for indicating whether the plurality of training videos included in the second training sample are consecutive video content. After the second model is obtained by training, the second model can determine, according to the plurality of videos, whether the plurality of pieces of video content are continuous. Therefore, the plurality of videos can be input to the second model. Correspondingly, the second model can output a result indicating whether the plurality of pieces of video content are consecutive video content. Therefore, it can determine, according to an output of the second model, that the plurality of pieces of video content are consecutive video content.

For the first model and the second model, this embodiment of the present application does not specifically limit structures of the first model and the second model. The first model and the second model may, for example, use model structures with image processing capabilities. For example, the first model and the second model may use Convolutional Neural Networks (CNN) structures.

The server can further determine the second video identifiers of the plurality of videos in a case that it is determined that the preset condition is satisfied.

In an example, if the first video identifiers are first video covers, and the second video identifiers are second video covers, in specific implementation of determining the second video identifiers of the plurality of videos, the server may splice the plurality of first video covers to obtain the second video covers. In this way, according to the second video covers obtained by splicing, a user can determine that the plurality of videos is a series of videos. In a specific example, the server can splice the plurality of first video covers to obtain the second video covers when the plurality of first video covers are consecutive video covers. In an example, the server may first determine a splicing sequence of the plurality of first video covers according to cover content of the plurality of video covers, and further splice the plurality of first video covers according to the splicing sequence to obtain the second video covers.

As mentioned earlier, the first video covers may include the first video serial numbers. In this case, the video cover obtained by splicing the plurality of first video covers includes a plurality of first video serial numbers. However, it is improper that one cover includes a plurality of first video serial numbers. Therefore, in this case, after obtaining a third video cover that includes the plurality of first video serial numbers, the server can remove the plurality of first video serial numbers included on the third video cover, thereby avoiding such a situation that one cover includes a plurality of first video serial numbers. After removing the plurality of first video serial numbers, second video serial numbers can be added to the third video cover to obtain second video covers respectively corresponding to the various videos among the plurality of videos. Each second video cover includes the second video serial number of the video corresponding to the second video cover. In this way, for each video, its corresponding second video cover includes a second video serial number, so that it is convenient for a user to determine a position of the video in the series of videos based on the second video serial number. It is easy to understand that in this case, the second video cover does not include the first video serial number, but includes the second video serial number.

Regarding the first video serial number and the second video serial number, it should be noted that each video in the plurality of videos corresponds to one first video serial number. Therefore, the plurality of videos can correspond to a plurality of first video serial numbers. Similarly, each video in the plurality of videos corresponds to one second video serial number, so the plurality of videos can correspond to a plurality of second video serial numbers. In this embodiment of the present application, to open a user to determine the positions of the plurality of videos in the series of videos through the second video serial numbers of the various videos, an association relationship between the plurality of second video serial numbers may be consistent with an association relationship between the plurality of first video serial numbers. The association relationship between the plurality of second video serial numbers may be consistent with the association relationship between the plurality of first video serial numbers, which may be that a numbering order of the plurality of first video serial numbers is consistent with a numbering order between the plurality of second video serial numbers. For example, for three videos, assuming that first video covers of the three videos include video serial numbers "1", "2", and "3" respectively, second video covers corresponding to the three videos may include video serial numbers "Episode 1", "Episode 2", and "Episode 3" respectively, or second video covers corresponding to the three videos may include video serial numbers "1", "2", and "3" respectively.

In an example, if the first video identifiers are first video covers, and the second video identifiers are second video covers, in specific implementation of determining the second video identifiers of the plurality of videos, the server may determine, from the plurality of videos, a video frame that satisfies the preset condition, and obtain the second video covers according to the video frame. Since the second video covers is obtained based on the video frame, a user can obtain, based on the second video covers, information related to the plurality of videos, thereby enhancing a user experience.

In this embodiment of the present application, the video frame that satisfies the preset condition may be, for example, a highlight frame among the plurality of videos. The highlight frame mentioned here may be a video frame with higher attractiveness among the plurality of videos. The highlight frame may be measured based on information in one or several dimensions. A data dimension for measuring a highlight frame can be determined according to video content of the plurality of videos. This embodiment of the present application does not specifically limit a specific data dimension.

In this embodiment of the present application, in specific implementation of obtaining the second video covers according to the video frame, for example, the video frame can be directly used as the second video cover. For another example, a target object in the video frame can be extracted, e.g. extracting a person in the video frame and taking the target object as the second video cover.

In an example, in a case that the plurality of pieces of video content are consecutive video content, the server can determine, from the plurality of videos, a video frame that satisfies the preset condition; and obtain the second video covers according to the video frame. In another example, in a case that the plurality of pieces of video content are the consecutive video content and the plurality of first video covers are not the consecutive video covers, the server can determine a video frame that satisfies the preset condition from the plurality of videos, and obtain the second video covers according to the video frame.

In an example, to facilitate a user to determine a theme of the plurality of videos through the second video covers, the second video covers further include a video title. In this case, the server can further determine the video title. As an example, the server can determine the video title according to video content of the plurality of videos. For example, the server can extract several video frames from the plurality of videos and analyze the several extracted frames to obtain the video title. As another example, the server can determine the video title according to original titles of the plurality of videos. Considering that when posting the videos, the user usually edits a title based on a video that is posted first, the title of the video that is posted first among the plurality of videos can be determined to be the video title.

S103: The server sends the second video identifiers to the first client, and controls the first client to switch, in response to satisfying the preset condition, the first video identifiers corresponding to the plurality of videos to the second video identifiers.

S104: In response to satisfying the preset condition, the first client switches the first video identifiers corresponding to the plurality of videos to the second video identifiers.

After determining the second video identifiers, the server can send the second video identifiers to the first client, and then control, in response to satisfying the preset condition, the first client to switch the first video identifiers corresponding to the plurality of videos to the second video identifiers. Correspondingly, the first client can switch the first video identifiers corresponding to the plurality of videos to the second video identifiers.

In an example, the server can send first indication information and the second video identifiers to the first client. The first indication information is used for instructing the first client to switch, in response to satisfying the preset condition, the first video identifiers of the plurality of videos to the second video identifiers. Correspondingly, the first client can receive the first indication information sent by the server and the second video identifiers sent by the server, and switch, based on the first indication information and the second video identifiers in response to satisfying the preset condition, the first video identifiers corresponding to the plurality of videos to the second video identifiers.

For the first indication information, it should be noted that:
In an embodiment, the first indication information is used for instructing the first client to switch the first video identifiers corresponding to the various videos among the plurality of videos to the second video identifiers respectively corresponding to the various videos. Correspondingly, in this case, the first client can switch the first video identifiers corresponding to the various videos among the plurality of videos to the second video identifiers corresponding to the various videos after receiving the first indication information and the second video identifiers. When the first video identifiers are first video covers, and the second video identifiers are second video covers, the first client can switch the first video cover corresponding to each video to the corresponding second video cover.

In another example, the second video identifiers can serve as a video identifier of a video collection that includes the plurality of videos. In this case, the first indication information is used for instructing the first client to: in response to satisfying the preset condition, cancel displaying the plurality of first video identifiers of the plurality of videos and display the second video identifier jointly corresponding to the plurality of videos. The second video identifier jointly corresponding to the plurality of videos can be understood as the video identifier of the video collection. Correspondingly, in this situation, after receiving the first indication information and the second video identifier, the first client can cancel displaying the plurality of first video identifiers of the plurality of videos and display the second video identifier corresponding to the video collection. In this case, a quantity of the video identifiers displayed by the first client decreases, so that, correspondingly, video identifiers of more other videos can be displayed on the first page. Regarding the video collection, it should be noted that the video collection includes the plurality of videos, and a video arrangement sequence of the plurality of videos in the video collection is determined according to a posting sequence of the plurality of videos. For example, the video arrangement sequence of the videos in the video collection is consistent with the posting sequence of the plurality of videos.

When the second video identifier is the video identifier corresponding to the video collection, if the second video identifier is a second video cover, the second video cover may further include a quantity of the videos included in the video collection. For example, the second video cover includes: "3 episodes in total". In this way, a user can determine the quantity of the videos included in the video collection through the second video cover, thereby enhancing a user experience.

In an example, before switching the first video identifiers of the plurality of videos to the second video identifiers, the first client can determine whether the preset condition is satisfied. The specific implementation of determining, by the first client, whether the preset condition is satisfied is the same as the specific implementation of determining, by the server, whether the preset condition is satisfied, and this will not be repeatedly described here.

In another example, if the server has already performed the operation of determining whether the preset condition is satisfied, for example, in a case that the server only executes S102 after confirming that the preset condition is satisfied, the first client may not need to determine whether the preset condition is satisfied, but directly switch the first video identifiers of the plurality of videos to the second video identifiers based on the received second video identifiers.

In an example, before the first client executes S104, a user can trigger an open operation for a video identifier switching function. Correspondingly, the first client can receive the open operation and open the video identifier switching function. The video identifier switching function can intelligently switch video identifiers of posted videos. The first client executes S104 only after opening the video identifier switching operation. If the first client does not open the video identifier switching operation, the first client will not execute S104. Video identifiers displayed on the client will be the first video identifiers edited by the user. In this case, the user can determine, according to an own need, whether to open the video identifier switching function, so as to meet different needs of the user.

In an example, the user can trigger the open operation through a first control. This embodiment of the present application does not specifically limit the first control. The first control may be a control on the first page or a control on another page such as a settings page.

In an example, before executing S104, the first client may display second prompt information on the first page. The second prompt information is used for prompting to switch the first video identifiers of the plurality of videos to the second video identifiers. For example, the second prompt information may be "Intelligently switch video identifier by one click". A user can trigger a confirming operation for the second prompt information. For example, the user can tap the second prompt information. After the user triggers the confirming operation for the second prompt information, the first client can switch the first video identifiers corresponding to the plurality of videos to the second video identifiers in response to the confirming operation. By using this method, the user can be reminded of switching the first video identifiers to the second video identifiers, without opening the video identifier switching function in advance. The user operation is convenient, and a user experience can be enhanced.

In an example, after executing S104, the first client can further display first prompt information. The first prompt information is used for prompting that the video identifier switching function has been opened, so that the user can determine, according to the first prompt information, that the first video identifiers edited for the plurality of videos have been intelligently switched to the second video identifiers when posting the videos. In an example, the first client can display the first prompt information on the first page. In this way, the user can view both the second video identifiers and the first prompt information on the first page, so that the user can determine, according to the first prompt information, that the first video identifiers edited for plurality of videos have been intelligently switched to the second video identifiers when posting the videos.

As mentioned earlier, the second video identifiers can be the video identifier corresponding to the video collection. In this way, the user can also trigger, through the second video identifier, an interaction operation related to the video collection. In an example, after the user performs a triggering operation on the second video identifier, the first client can display a video playing page in response to the triggering operation for the second video identifier. The video playing page is used for playing a first video among the plurality of videos.

Regarding the first video, it should be noted that:

In an example, the first video may be any video among the plurality of videos.

In another example, considering a coherence between the content of the plurality of videos, a user will consider the coherence of the video content when posting the videos. Therefore, the first video may be a video that is posted first among the plurality of videos, which makes it easier for the user to understand the video content of the plurality of videos.

In another example, to provide a user with content that the user is interest in, the first video may be the hottest video among the plurality of videos. Being the hottest mentioned here, for example, can be that the video due to the number of views satisfies a condition, or can be that the number of likes satisfies a condition. This will not be enumerated here.

In addition, if the user is watching a video (e.g. video A) among the plurality of videos before viewing the first page, the first video can be video A, so that the user can continue to watch video A on the video playing page to meet the need of the user. In a specific example, a page displayed by the first client before the first page is displayed is a second page. The second page is used for playing the first video. The user can trigger an operation on the second page, such as triggering an operation of entering a homepage of a posting account of the first video. Correspondingly, the first client can display the first page in response to a triggering operation performed in the second page. The first page includes the second video identifiers. In this case, if the user triggers an operation on the second video identifiers in the first page, the first video can be played on the video playing page. In an example, the first client can record a playing position of the first video on the second page. When the first video is played on the video playing page, the first video can start to be played from that playing position.

In addition, the video playing page can also display an interaction control in addition to playing the first video. The interaction control is used for triggering displaying video information of the video collection. In an example, the user can perform a triggering operation on the interaction control. Correspondingly, the first client can display video information of the plurality of videos included in the video collection in response to the triggering operation for the interaction control. The video information of the plurality of videos may include, for example, video serial numbers of the plurality of videos and video introductions of the plurality of videos. These will not be enumerated here.

In an example, the first client may display the video information of the plurality of videos in the format of a list. A sequence of the video information of the plurality of videos in the list may be, for example, consistent with the posting sequence of the plurality of videos.

In an example, the video information of the first video may include third prompt information. The third prompt information may be used for prompting that a video played on the video playing page is the first video. In this way, based on the third prompt information, the user can determine the position of the currently played first video in the video collection, so that after the playing of the first video is completed, the user can continue to perform a triggering operation on the video information of other videos and watch other videos.

This embodiment of the present application does not specifically limit the form of the third prompt information. In an example, the third prompt information may be text. For example, the video information of the first video includes text "Playing Now". In another example, the third prompt information may reflect a display style of the video information of the first video. For example, the video information of the first video is displayed in a grayscale manner, and the video information of other videos is displayed in a non-grayscale manner. For another example, a background of a display region of the video information of the first video is different from backgrounds of display regions of the video information of other videos. The form of the third prompt information will not be enumerated here.

Next, based on a specific scenario, the video processing method provided by the embodiments of the present application will be introduced.

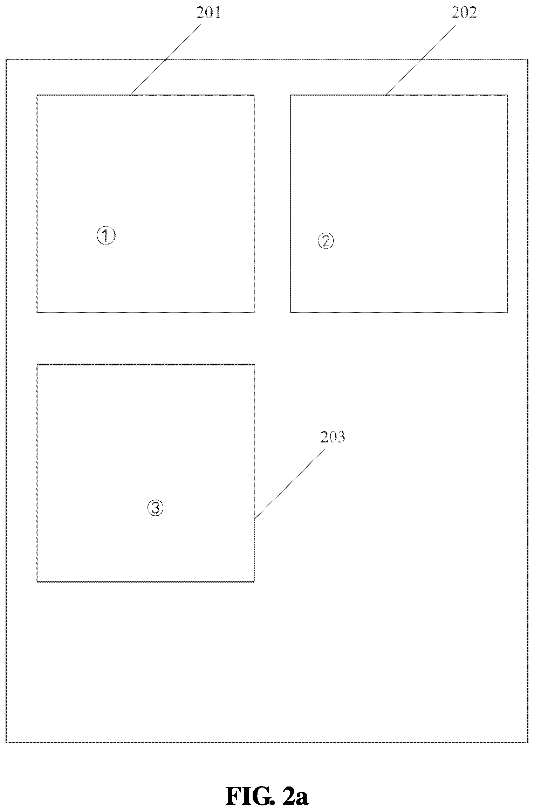

Referring to FIG. 2a, it is a schematic diagram of a first page provided by an embodiment of the present application. As shown in FIG. 2a, three first video covers are displayed on the first page, namely a first video cover 201, a first video cover 202, and a first video cover 203. The first video cover 201 includes a first video serial number ①; the first video cover 202 includes a first video serial number ②; and the first video cover 203 includes a first video serial number ③.

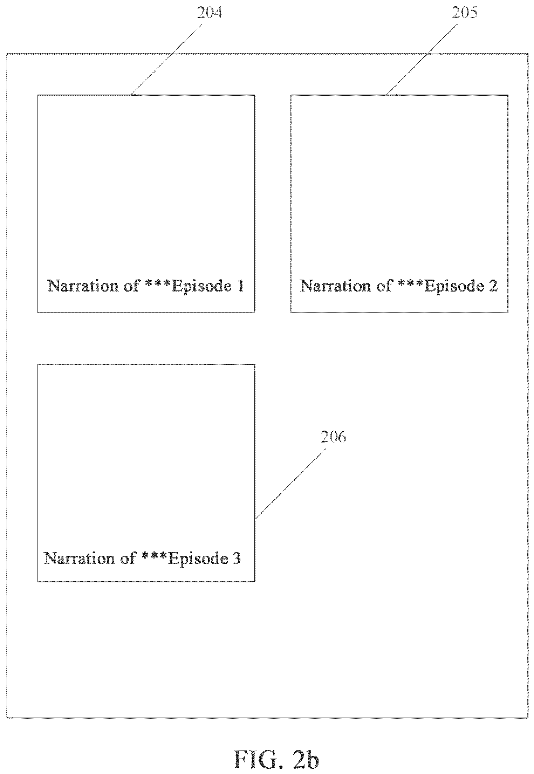

In a case that the video identifier switching function is opened, in an example, the first page displayed on the first page can be as shown in FIG. 2b. FIG. 2b is a schematic diagram of another first page provided by an embodiment of the present application. As shown in FIG. 2b, the first video cover 201 is replaced with a second video cover 204; the first video cover 202 is replaced with a second video cover 205; and the first video cover 203 is replaced with a second video cover 206. The second video cover 204 includes a second video serial number "Episode 1"; the second video cover 205 includes a second video serial number "Episode 2"; and the second video cover 206 includes a second video serial number "Episode 3". In addition, the second video cover 204, the second video cover 205, and the second video cover 206 all include a video title "Narration of ***". The plurality of second video covers shown in FIG. 2b are obtained by splicing the plurality of first video covers shown in FIG. 2a.

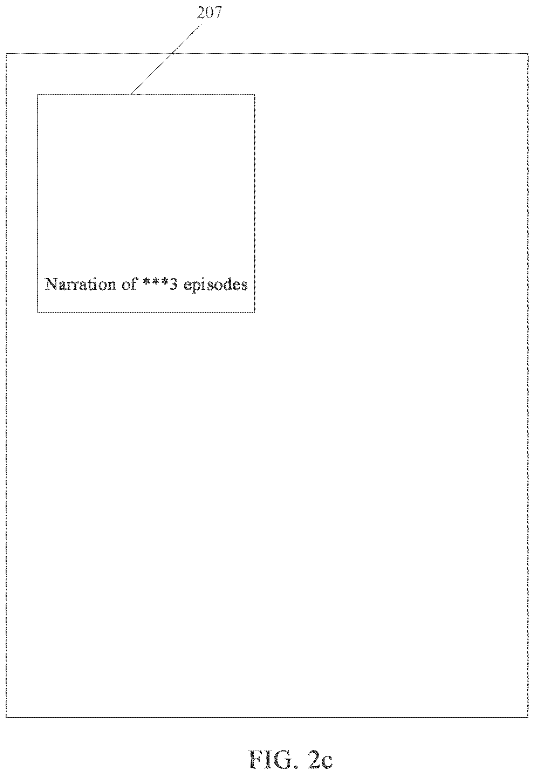

In a case that the video identifier switching function is opened, in another example, the first page displayed on the first page can be as shown in FIG. 2c. FIG. 2c is a schematic diagram of another first page provided by an embodiment of the present application. As shown in FIG. 2c, the first video cover 201, the first video cover 202, and the first video cover 203 are no longer displayed on the first page. Instead, a second video cover 207 corresponding to a video collection is displayed. The second video cover 207 includes a video title "Narration of ***". The second video cover 207 may further include a quantity of videos included in the video collection "3 episodes in total". The second video cover 207 shown in FIG. 2c is obtained by splicing the plurality of first video covers shown in FIG. 2a.

It should be noted that FIG. 2a to FIG. 2c are shown for the purpose of understanding this solution and do not constitute a limitation on the embodiments of the present application. The content displayed on the first page is not limited to those shown in FIG. 2a to FIG. 2c.

### Exemplary device

Based on the method provided by the above embodiment, the embodiments of the present application further provide a corresponding apparatus. The apparatus will be introduced below in conjunction with the accompanying drawings.

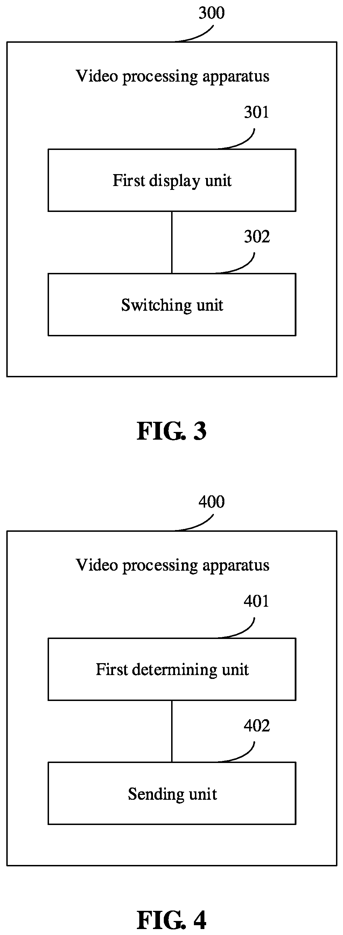

Referring to FIG. 3, it is a schematic structural diagram of an apparatus for video processing provided by an embodiment of the present application. The apparatus for video processing 300 shown in FIG. 3 can be applied to a first client and is configured to perform the video processing method that is provided by the above method embodiment and is performed by the first client. The apparatus 300 may specifically include, for example: a first display unit 301 and a switching unit 302.

The first display unit 301 is configured to: after posting a plurality of videos, display first video identifiers corresponding to the plurality of videos on a first page.

The switching unit 302 is configured to: in response to satisfying a preset condition, switch the first video identifiers corresponding to the plurality of videos to second video identifiers.

Alternatively, the switching unit 302 is configured to:
in a case that a plurality of first video covers corresponding to the plurality of videos are consecutive video covers and/or a plurality of pieces of video content corresponding to the plurality of videos are consecutive video content, switch the first video covers corresponding to the plurality of videos to second video covers.

Alternatively, the apparatus further includes:
a receiving unit, configured to: receive, before switching the first video identifiers corresponding to the plurality of videos to the second video identifiers, an open operation for a video identifier switching function; and
an opening unit, configured to: in response to the open operation, open the video identifier switching function.

Alternatively, the apparatus further includes:
a second display unit, configured to display first prompt information, wherein the first prompt information is used for prompting that the video identifier switching function has been opened.

Alternatively, the second video covers are obtained by splicing the plurality of first video covers corresponding to the plurality of videos; or, the second video covers are obtained according to the plurality of pieces of video content.

Alternatively, in a case that the plurality of first video covers corresponding to the plurality of videos are the consecutive video covers, the second video covers is obtained by splicing the plurality of first video covers corresponding to the plurality of videos.

Alternatively, in a case that the plurality of pieces of video content corresponding to the plurality of videos are the consecutive video content and the plurality of first video covers corresponding to the plurality of videos are not the consecutive video covers, the second video covers is obtained according to the plurality of pieces of video content.

Alternatively, the switching unit 302 is configured to:
switch the first video identifiers corresponding to the various videos among the plurality of videos to the second video identifiers respectively corresponding to the various videos.

Alternatively, the switching unit 302 is configured to:
canceling displaying the plurality of first video identifiers of the plurality of videos, and displaying the second video identifier jointly corresponding to the plurality of videos, wherein the second video identifier is a collection identifier of a video collection corresponding to the plurality of videos, and a video arrangement sequence in the video collection is determined according to a posting sequence of the plurality of videos.

Alternatively, the first video identifiers are first video covers; the second video identifier is a second video cover; and a quantity of the videos included in the video collection is further displayed on the second video cover.

Alternatively, the apparatus further includes:
a third display unit, configured to display second prompt information on the first page, wherein the second prompt information is used for promoting to switch the first video identifiers of the plurality of videos to the second video identifiers.

Correspondingly, the switch unit 302 is configured to:
in response to a confirming operation for the second prompt information, switch the first video identifiers corresponding to the plurality of videos to the second video identifiers.

Alternatively, the first video identifiers are first video covers; the second video identifiers are second video covers; the first video covers include first video serial numbers; the second video covers do not include the first video serial numbers, and the second video covers include second video serial numbers; and an association relationship between the plurality of second video serial numbers corresponding to the plurality of videos is consistent with an association relationship between the plurality of first video serial numbers corresponding to the plurality of videos.

Alternatively, the second video identifiers are second video covers; the second video covers further include a video title; and the video title is determined in the following way:
determining a title of a video that is posted first in the plurality of videos to be the video title; or,
determining the video title according to video content of the plurality of videos.

Alternatively, the apparatus further includes:
a fourth display unit, configured to: in response to a triggering operation for the second video identifier, display a video playing page, wherein the video playing page is used for playing a first video in the plurality of videos; an interaction control is further displayed on the video displaying page; and the interaction control is used for triggering displaying of video information of the video collection.

Alternatively, the apparatus further includes:
a fifth display unit, configured to: in response to a triggering operation for the interaction control, display video information of the plurality of videos included in the video collection, wherein the video information of the first video includes third prompt information; and the third prompt information is used for prompting that a video played on the video playing page is the first video.

Alternatively, the first video is a video played on a second page displayed by a first client, and the apparatus further includes:
a fifth display unit, configured to: display the second page before displaying the second video identifier of the video collection, wherein the second page is used for playing the first video; and
displaying the second video identifier jointly corresponding to the plurality of videos includes:
in response to a triggering operation for the second page, displaying the first page, and displaying the second video identifier jointly corresponding to the plurality of videos on the first page.

Alternatively, the first video is a video that is posted first in the plurality of videos, or the first video is the hottest video in the plurality of videos.

Referring to FIG. 4, it is a schematic structural diagram of another apparatus for video processing provided by an embodiment of the present application. The apparatus for video processing 400 shown in FIG. 4 can be applied to a server and is configured to perform the video processing method that is provided by the above method embodiment and is performed by the server. The apparatus 400 may specifically include, for example: a first determining unit 401 and a sending unit 402.

The first determining unit 401 is configured to determine second video identifiers corresponding to first video identifiers of a plurality of videos that have been posted by a first client.

The sending unit 402 is configured to: send the second video identifiers to the first client, and control the first client to switch, in response to satisfying a preset condition, the first video identifiers corresponding to the plurality of videos to the second video identifiers.

Alternatively, the sending unit 402 is configured to:
send first indication information and the second video identifiers to the first client, wherein the first indication information is used for instructing the first client to switch, in response to satisfying the preset condition, the first video identifiers corresponding to the plurality of videos to the second video identifiers.

Alternatively, satisfying the preset condition includes:
a plurality of first video covers corresponding to the plurality of videos are consecutive video covers, and/or a plurality of pieces of video content corresponding to the plurality of videos are consecutive video content.

Alternatively, the first video identifiers are first video covers; the second video identifiers are second video covers; and the first determining unit 401 is configured to:
splice the plurality of first video identifiers to obtain the second video identifiers.

Alternatively, the first video covers include first video serial numbers; the plurality of videos correspond to a plurality of first video serial numbers; each video corresponds to one first video serial number; and the first determining unit 401 is configured to:
splice the video covers of the plurality of videos to obtain a third video cover that includes the plurality of first video serial numbers; and
remove the plurality of first video serial numbers included on the third video cover, and respectively add second video serial numbers to the third video cover to obtain second video covers respectively corresponding to the various videos among the plurality of videos, wherein each second video cover includes the second video serial number of the video corresponding to the second video cover.

Alternatively, the plurality of videos corresponds to a plurality of second video serial numbers; each video corresponds to one second video serial number; and an association relationship between the plurality of second video serial numbers is consistent with an association relationship between the plurality of first video serial numbers.

Alternatively, the first video identifiers are first video covers; the second video identifiers are second video covers; and the first determining unit 401 is configured to:
determine, from the plurality of videos, a video frame that satisfies a preset condition; and
obtain the second video covers according to the video frame.

Alternatively, the second video identifiers are second video covers; the second video covers further include a video title; and the apparatus further includes:
a second determining unit, configured to determine a title of a video that is posted first in the plurality of videos to be the video title; or,
a third determining unit, configured to determine the video title according to video content of the plurality of videos.

Alternatively,
the first indication information is used for instructing the first client to switch the first video identifiers corresponding to the various videos among the plurality of videos to the second video identifiers respectively corresponding to the various videos; or,
the first indication information is used for instructing the first client to: cancel displaying the plurality of first video identifiers of the plurality of videos and display the second video identifier jointly corresponding to the plurality of videos, wherein the second video identifier is a video identifier corresponding to a video collection corresponding to the plurality of videos, and a video arrangement sequence in the video collection is determined according to a posting sequence of the plurality of videos.

Alternatively, the second video identifier is a second video cover. If the second video identifier is the video identifier corresponding to the video collection, the second video cover further includes a quantity of the videos included in the video collection.

Alternatively, the apparatus further includes:
a fourth determining unit, configured to: before determining the second video identifiers, according to video titles of the videos that have been posted by the first client and/or the video serial numbers included on the video covers of the posted videos, determine the plurality of videos from the videos that have been posted by the first client.

Alternatively, the fourth determining unit is configured to:
before determining the second video identifiers, according to similarities of the video titles of the videos that have been posted, and/or, types of the video serial numbers included on the video covers, determine the plurality of videos from the videos that have been posted by the first client.

The apparatuses 300 and 400 are apparatuses corresponding to the methods provided by the above method embodiments. Specific implementations of all the units of the apparatuses 300 and 400 belong to the same concept of the above method embodiments. Therefore, the specific implementation of all the units of the apparatuses 300 and 400 can be found in the descriptions of the above method embodiments, and will not be elaborated here.

The embodiments of the present application further provide a device. The device includes a processor and a memory.

The processor is configured to execute instructions stored in the memory to cause the device to perform the video processing method provided by any of the above method embodiments.

The embodiments of the present application provide a computer-readable storage medium, including instructions. The instructions instruct a device to perform the video processing method provided by any of the above method embodiments.

The embodiments of the present application provide a computer program product. The computer program product, when run on a computer, causes the computer to perform the video processing method provided by any of the above method embodiments.

Those skilled in the art will easily come up with other implementations of the present application after considering this specification and implementing the invention disclosed here. The present application aims to cover any variations, uses, or adaptive changes of the present application, and these variations, uses, or adaptive changes follow the general principles of the present application and include common knowledge or customary technical means in the technical field that are not disclosed herein. The specification and the embodiments are considered as merely exemplary, and the scope and spirit of the present application are pointed out in the following claims.

It should be understood that the present application is not limited to the precise structures that have been described above and shown in the drawings, and various modifications and changes can be made without departing from the scope of the present application. The scope of the present application is subject only to the appended claims.

The foregoing descriptions are merely preferred embodiments of the present application, but are not intended to limit present application. Any modification, equivalent replacement, or improvement made within the spirit and principle of present application shall fall within the protection scope of the present application.

## Claims

1. A video processing method, comprising:
after posting a plurality of video, displaying first video identifiers corresponding to the plurality of videos on a first page; and
in response to satisfying a preset condition, switching the first video identifiers corresponding to the plurality of videos to second video identifiers.

2. The method according to claim 1, wherein in response to satisfying a preset condition, switching the first video identifiers corresponding to the plurality of videos to the second video identifiers comprises:
in response to a plurality of first video covers corresponding to the plurality of videos being consecutive video covers and/or a plurality of pieces of video content corresponding to the plurality of videos being consecutive video content, switching the first video covers corresponding to the plurality of videos to second video covers.

3. The method according to claim 1, wherein before switching the first video identifiers corresponding to the plurality of videos to the second video identifiers, the method further comprises:
receiving an open operation for a video identifier switching function; and
in response to the open operation, opening the video identifier switching function.

4. The method according to claim 1, wherein the method further comprises:
displaying first prompt information, wherein the first prompt information is used for prompting that the video identifier switching function has been opened.

5. The method according to claim 2, wherein the second video covers are obtained by splicing the plurality of first video covers corresponding to the plurality of videos; or,
the second video covers are obtained according to the plurality of pieces of video content.

6. The method according to claim 5, wherein in response to the plurality of first video covers corresponding to the plurality of videos being the consecutive video covers, the second video covers are obtained by splicing the plurality of first video covers corresponding to the plurality of videos.

7. The method according to claim 5, wherein in response to the plurality of pieces of video content corresponding to the plurality of videos being the consecutive video content and the plurality of first video covers corresponding to the plurality of videos being not the consecutive video covers, the second video covers are obtained according to the plurality of pieces of video content.

8. The method according to claim 1, wherein switching the first video identifiers corresponding to the plurality of videos to the second video identifiers comprises:
switching the first video identifiers corresponding to the various videos among the plurality of videos to the second video identifiers respectively corresponding to the various videos.

9. The method according to claim 1, wherein switching the first video identifiers corresponding to the plurality of videos to the second video identifiers comprises:
canceling displaying the plurality of first video identifiers of the plurality of videos, and displaying the second video identifier jointly corresponding to the plurality of videos, wherein the second video identifier is a collection identifier of a video collection corresponding to the plurality of videos, and a video arrangement sequence in the video collection is determined according to a posting sequence of the plurality of videos.

10. The method according to claim 9, wherein the first video identifiers are first video covers; the second video identifier is a second video cover; and a quantity of the videos comprised in the video collection is further displayed on the second video cover.

11. The method according to claim 1, wherein the method further comprises:
displaying second prompt information on the first page, wherein the second prompt information is used for promoting to switch the first video identifiers of the plurality of videos to the second video identifiers; and
correspondingly, switching the first video identifiers corresponding to the plurality of videos to the second video identifiers comprises:
in response to a confirming operation for the second prompt information, switching the first video identifiers corresponding to the plurality of videos to the second video identifiers.

12. The method according to claim 8, wherein the first video identifiers are first video covers; the second video identifiers are second video covers; the first video covers comprise first video serial numbers; the second video covers do not comprise the first video serial numbers, and the second video covers comprise second video serial numbers; and an association relationship between the plurality of second video serial numbers corresponding to the plurality of videos is consistent with an association relationship between the plurality of first video serial numbers corresponding to the plurality of videos.

13. The method according to claim 1, wherein the second video identifiers are second video covers; the second video covers further comprise a video title; and the video title is determined by:
determining a title of a video that is posted first in the plurality of videos to be the video title; or,
determining the video title according to video content of the plurality of videos.

14. The method according to claim 9, wherein the method further comprises:
in response to a triggering operation for the second video identifier, displaying a video playing page, wherein the video playing page is used for playing a first video in the plurality of videos; an interaction control is further displayed on the video displaying page; and the interaction control is used for triggering displaying of video information of the video collection.

15. The method according to claim 14, wherein the method further comprises:
in response to a triggering operation for the interaction control, displaying video information of the plurality of videos comprised in the video collection, wherein the video information of the first video comprises third prompt information; and the third prompt information is used for prompting that a video played on the video playing page is the first video.

16. The method according to claim 14, wherein the first video is a video played on a second page displayed by a first client; and before displaying the second video identifier of the video collection, the method further comprises:
displaying the second page, wherein the second page is used for playing the first video; and
displaying the second video identifier jointly corresponding to the plurality of videos comprises:
in response to a triggering operation for the second page, displaying the first page, and displaying the second video identifier jointly corresponding to the plurality of videos on the first page.

17. A method for video processing, comprising:
determining second video identifiers corresponding to first video identifiers of a plurality of videos that have been posted by a first client; and
sending the second video identifiers to the first client, and controlling the first client to switch, in response to satisfying a preset condition, the first video identifiers corresponding to the plurality of videos to the second video identifiers.

18. The method according to claim 17, wherein sending the second video identifiers to the first client, and controlling the first client to switch, in response to satisfying the preset condition, the first video identifiers corresponding to the plurality of videos to the second video identifiers comprises:
sending first indication information and the second video identifiers to the first client, wherein the first indication information is used for instructing the first client to switch, in response to satisfying the preset condition, the first video identifiers corresponding to the plurality of videos to the second video identifiers.

19. The method according to claim 17, wherein satisfying the preset condition comprises:
a plurality of first video covers corresponding to the plurality of videos are consecutive video covers, and/or a plurality of pieces of video content corresponding to the plurality of videos are consecutive video content.

20. The method according to claim 17, wherein the first video identifiers are first video covers; the second video identifiers are second video covers; and determining the second video identifiers corresponding to the first video identifiers of the plurality of videos that have been posted by the first client comprises:
splicing the plurality of first video identifiers to obtain the second video identifiers; or,
determining, from the plurality of videos, a video frame that satisfies the preset condition; and obtaining the second video covers according to the video frame.

21. The method according to claim 17, wherein the second video identifiers are second video covers; the second video covers further comprise a video title; and the method further comprises:
determining a title of a video that is posted first in the plurality of videos to be the video title; or,
determining the video title according to video content of the plurality of videos.

22. A apparatus for video processing, comprising:
a first display unit, configured to: after posting a plurality of videos, display first video identifiers corresponding to the plurality of videos on a first page; and
a switching unit, configured to: in response to satisfying a preset condition, switching the first video identifiers corresponding to the plurality of videos to second video identifiers.

23. A apparatus for video processing, comprising:
a first determining unit, configured to determine second video identifiers corresponding to first video identifiers of a plurality of videos that have been posted by a first client; and
a sending unit, configured to: send the second video identifiers to the first client, and control the first client to switch, in response to satisfying a preset condition, the first video identifiers corresponding to the plurality of videos to the second video identifiers.

24. A device, comprising a processor and a memory,
wherein the processor is configured to execute instructions stored in the memory to cause the device to perform the method according to any of claims 1 to 21.

25. A computer-readable storage medium, comprising instructions, wherein the instructions instruct a device to perform the method according to any of claims 1 to 21.
